(19) **Europäisches Patentamt**

**European Patent Office**

**Office européen des brevets**

(11) **EP 1 167 619 B1**

(12) **EUROPEAN PATENT SPECIFICATION**

(45) Date of publication and mention
of the grant of the patent:
**30.07.2003 Bulletin 2003/31**

(21) Application number: **01949014.3**

(22) Date of filing: **29.01.2001**

(51) Int Cl.⁷: **D06N 3/00**, B32B 5/26,
B32B 5/28, D06N 3/14

(86) International application number:
**PCT/JP01/00578**

(87) International publication number:
**WO 01/057307 (09.08.2001 Gazette 2001/32)**

(54) **LEATHER-LIKE SHEETY PRODUCT AND PRODUCTION METHOD THEREFOR**

LEDERHÄNLICHES BLATTFÖRMIGES PRODUKT UND VERFAHREN ZU DESSEN
HERSTELLUNG

PRODUIT EN FEUILLE RAPPELANT LE CUIR ET SON PROCEDE DE FABRICATION

(84) Designated Contracting States:
**DE ES FR GB IT**

(30) Priority: **03.02.2000 JP 2000026011**

(43) Date of publication of application:
**02.01.2002 Bulletin 2002/01**

(73) Proprietor: **TEIJIN LIMITED**
**Osaka-shi Osaka 541-0054 (JP)**

(72) Inventors:
• **TAKEYAMA, Naohiko,**
**c/o Cordley Chemicals Ltd.**
**Ooda-shi, Shimane 694-0041 (JP)**
• **MIMURA, Masahisa, c/o Cordley Chemicals Ltd.**
**Ooda-shi, Shimane 694-0041 (JP)**

(74) Representative: **Hallybone, Huw George et al**
**Carpmaels and Ransford,**
**43 Bloomsbury Square**
**London WC1A 2RA (GB)**

(56) References cited:
**EP-A- 1 028 186          EP-A- 1 031 656**
**EP-A- 1 054 096          JP-A- 6 240 583**
**JP-A- 6 248 578          JP-A- 55 016 951**

• **DATABASE WPI Section Ch, Week 198437**
**Derwent Publications Ltd., London, GB; Class**
**F04, AN 1984-229164 XP002198834 & JP 59**
**137567 A (TORAY IND INC), 7 August 1984**
**(1984-08-07)**

**Description**

Detailed Description of the Invention

Field of the Invention

The present invention relates to a novel leather-like sheet product which has excellent stay properties and yet excellent balance between softness and buckling resistance and to a production process therefor. Particularly, it relates to a leather-like sheet product suitable for use in furniture and shoes and to a production process therefor.

Prior Art

Thanks to recent improvement made in technologies for making a fine fiber from a fiber in use, coagulating an impregnating resin and finishing for leather-like sheet products, quality such as softness, durability against actual use and the grade of suede- or nubuck-like appearance has been improved, whereby the leather-like sheet products are now used in a wide variety of fields such as clothing, furniture and shoes. However, the leather-like sheet products are still unsatisfactory in terms of a soft and tight feel equivalent to high-quality natural leather.

To obtain a sheet product having a similar feel to natural leather, processes for laminating together two separately produced sheet layers are disclosed by JP-B 62-15673 and JP-B 62-38474 (the term "JP-B" as used herein means an "examined Japanese patent publication"). Although the obtained sheet product has a difference between front and rear sides, when it is soft as a whole, it lacks tightness and when it has tightness, it is hard. Therefore, a sheet product as soft and tight as natural leather cannot be obtained by these processes. The processes involve such a problem that when a treating solution is coated in the form of a film, the obtained sheet product becomes too hard because a resin or fiber constituting the sheet product is dissolved in a solvent and bonded. Further, when the amount of a component dissolved in the treating solution is small on the adhesive surface, for example, a resin component of a sheet product which contains a large amount of a fiber and a small amount of an impregnating resin is dissolved and bonded, sufficient adhesive force is hardly obtained.

Meanwhile, when a soft substrate is produced, there is such a problem that the feel and buckling resistance of the obtained product worsen and natural leather-like properties such as softness and round deformation with fine wrinkles when it is bent cannot be obtained because the substrate is forcedly elongated by tension generated during processing.

To solve the above problems, a fabric scrim and an elastomer sheet of rubber may be inserted into an intermediate layer as a reinforcement. However, when scrim is used, strength improves but anisotropy is seen in a weaving direction, whereby the obtained product cannot be round unlike natural leather. When the elastomer sheet is used, elastic recovery when it is greatly bent cannot be small and elastic recovery is large unlike natural leather.

Particularly in such an application field as furniture that use a part in a large area, a sheet product having a large width is now in demand to improve cutting yield. However, the width of a sheet product is limited by machining equipment in each step and the existing equipment is designed to produce a hard substrate. As a result, when a soft substrate is to be produced, the substrate is elongated in length and shrunk in width by tension in a lengthwise direction, thereby making it possible to produce only products having a small width. To produce a product having a large width, a huge amount of investment is needed to modify the equipment to increase the width and reduce tension in addition to the solving of the above quality problems. Therefore, a production process for a sheet product having soft substrate without reducing its quality as well as suppressing the shrinkage in width during processing has been strongly desired.

Summary of the Invention

It is an object of the present invention which has been made in view of the above problems of the prior art to provide a leather-like sheet product which has excellent stay properties like natural leather and yet excellent balance between softness and buckling resistance and is deformed round with fine wrinkles when it is bent as well as a production process therefor.

Means for solving the Problems

According to researches conducted by the inventors of the present invention, it has been found that the above object of the present invention is attained by a leather-like sheet product which comprises (a) a sheet layer (1) composed of a fiber assembly (1) of fine fibers and an elastic polymer (A) existent in a space between fibers of the fiber assembly (1), (b) a sheet layer (2) essentially composed of a fiber assembly (2) or composed of a fiber assembly (2) and an elastic polymer (C) existent in a space between fibers of the fiber assembly (2), and (c) an adhesive layer, composed of an elastic polymer (B), for bonding together the sheet layer (1) and the sheet layer (2), wherein

(d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially bonded or not bonded to the elastic polymer (B); and (e) the elastic polymer (B) is existent in the adhesive layer in a state that it is bonded to at least the elastic polymer (A) contained in the sheet layer (1) at the interface.

Researches conducted by the inventors of the present invention have revealed that the leather-like sheet product of the present invention can be obtained by the following production process.

That is, according to the present invention, there is provided a process for producing a leather-like sheet product comprising the steps of:

bonding together a sheet layer (1') composed of a fiber assembly of sea-island type fibers made from a mixture of at least two different polymers which differ from each other in solvent solubility and an elastic polymer (A) existent in a space between fibers of the fiber assembly and a sheet layer (2) essentially composed of a fiber assembly (2) or composed of a fiber assembly (2) and an elastic polymer (C) existent in a space between fibers of the fiber assembly (2) by an adhesive layer composed of an elastic polymer (B); and

treating the laminated sheets with a solvent which does not dissolve the island component of the sea-island type fiber and the elastic polymers but dissolves the sea component of the sea-island type fiber to dissolve and remove the sea component in order to make a fine fiber from the sea-island fiber.

Embodiment of the Invention

The leather-like sheet product and production process therefor of the present invention will be described in detail hereinbelow.

The leather-like sheet product of the present invention substantially comprises a sheet layer (1) and a sheet layer (2) both of which are bonded together by an adhesive layer composed of an elastic polymer (B).

The sheet layer (1) of the present invention is composed of a fiber assembly (1) of fine fibers and an elastic polymer (A) existent in a space between fibers of the fiber assembly (1) and preferably contains a resin which comprises as an essential ingredient a high-molecular elastic polymer in a space between fibers of a finely entangled nonwoven fabric which is entangled inform of three dimensions.

The fine fiber is a fine fiber of 0.5 dtex or less, preferably 0.1 dtex or less, or a bundle of fine fibers of 0.5 dtex or less, preferably 0.1 dtex or less. Stated more specifically, it is (i) a fine fiber of 0.5 dtex or less obtained by spinning independently, or (ii) a fine fiber obtained by removing at least one component of a multi-component fiber obtained by spinning a polymer composition consisting of two or more components which differ from each other in solvent solubility by composite spinning or blend spinning as a sea-island type fiber, or a fine fiber obtained by splitting a composite fiber having a laminated section. To obtain a non-bonding structure with the elastic polymer (B) to be treated later, the surface of the fiber may be treated with a sizing agent such as silicone or polyvinyl alcohol. As for a preferred combination of components of a polymer composition consisting of two or more components which differ from each other in solvent solubility, when a polyester is selected as an insoluble component, a polyolefin such as polyethylene, polypropylene or polystyrene is preferably selected as an easily soluble component and when a polyamide is selected as an insoluble component, a polyester or polyolefin is preferably selected as an easily soluble component.

To obtain a fiber assembly of these fibers, a known card, layer, needle rocker or fluid (water jet) entangling machine is preferably used to produce a finely entangled nonwoven fabric having a high density of entangled fibers.

In the sheet layer (1) of the present invention, the elastic polymer (A) existent in a space between fibers of the fiber assembly is a polyurethane-based elastomer such as polyurethane elastomer, polyurea elastomer or polyurethane-urea elastomer, polyester-based elastomer, synthetic rubber, natural rubber or polyacrylic acid resin, out of which a polyurethane-based elastomer is preferred. For example, the polyurethane-based elastomer is obtained by reacting a polyol with an organic diisocyanate in the presence of a low-molecular weight chain extender. That is, the polyurethane-based elastomer is obtained by reacting a polyol having a molecular weight of 500 to 4,000 such as polyethylene glycol, polypropylene glycol, polytetramethylene glycol, polybutylene carbonate, polyhexamethylene carbonate, polyethylene adipate, polybutylene adipate or polyhexamethylene adipate with an organic diisocyanate such as diphenylmethane diisocyanate, tolylene diisocyanate, xylylene diisocyanate, 4,4'-dicyclohexylmethane diisocyanate or 3,3,5-trimethyl-5-isocyanatemethylcyclohexyl isocyanate in the presence of a low-molecular weight chain extender such as ethylene glycol, butylene glycol, xylylene glycol, propylenediamine, hexamethylenediamine, 4,4'-diaminodiphenylmethane, 3,3,5-trimethyl-5-aminomethylcyclohexylamine, 4,4'-diaminodicyclohexylmethane, hydrazine, amino acid hydrazide or dicarboxylic acid hydrazide. The hardness of the elastic polymer (A) is preferably 100 to 3,000 N/cm$^2$, more preferably 300 to 1,500 N/cm$^2$, the most preferably 400 to 1,000 N/cm$^2$ in terms of 100 % elongation stress of a film formed from the elastic polymer (A) alone.

To make the elastic polymer (A) existent in the fiber assembly, the fiber assembly is treated with an organic solvent solution or aqueous dispersion of the elastic polymer (A) and then the solution is coagulated on the fiber assembly by a conventionally known wet coagulation process or dry coagulation process. Any compounding agents such as a porosity controlling agent and colorant may be added to the treating solution in limits that do not impair the elasticity of the elastic polymer (A). Since the softness and elastic recovery of the sheet product are adjusted by the amount of the elastic polymer (A) deposited on the fiber assembly, the amount of the elastic polymer is preferably 10 to 120 wt%, more preferably 25 to 80 wt% based on the fiber assembly.

A grain layer composed of an elastic polymer or a napped layer of fine fibers may be formed on the surface (surface opposite to the surface to which the sheet layer (2) is bonded) which is the exterior side of a leather-like sheet product of the sheet layer (1) by a conventionally known method. The elastic polymer of the grain layer may be porous or non-porous, or a single layer or laminate. The formation of the grain layer or napped layer may be carried out before or after the step of bonding the sheet layers by the adhesive layer composed of the elastic polymer (B).

The thickness and density of the sheet layer (1) of the leather-like sheet product of the present invention are preferably as follows. First, the thickness $t_1$ (mm) of the sheet layer (1) is preferably 0.2 to 1.5 mm, more preferably 0.3 to 1.3 mm. When the thickness is smaller than 0.2 mm, the layer is too thin and not strong enough, or maybe difficult to be processed substantially. When the thickness is larger than 1.5 mm, the layer is too thick, has a hard feel and may be limited in application. Further, the apparent density $\rho_1$ (g/cm$^3$) of the sheet layer (1) is preferably 0.20 to 0.48 g/cm$^3$, more preferably 0.25 to 0.45 g/cm$^3$. When the apparent density of the sheet layer (1) is smaller than 0.20 g/cm$^3$, the layer has a soft feel but not tight feel and may not be strong enough. When the apparent density is larger than 0.48 g/cm$^3$, the layer may have a hard feel.

A description is subsequently given of the sheet layer (2) of the leather-like sheet product of the present invention. The sheet layer (2) is composed of a fiber assembly (2) and an elastic polymer (e) existent in a space between fibers of the fiber assembly (2). The fibers constituting the fiber assembly (2) of the sheet layer (2) may be ordinary fibers, for example, natural fibers such as cotton, flax or wool fibers. chemical fibers such as rayon, nylon, polyester or polyurethane fibers, or blend fibers thereof. The fiber assembly may be a fabric such as a knitted fabric other than a entangled nonwoven fabric. In order to obtain a non-bonding structure with the elastic polymer (C), it is preferred to treat the surface of the fiber with a sizing agent such as silicone or polyvinyl alcohol in advance or to use a sea-island type fiber from which a sea component can be removed after the sheet layers (1) and (2) are bonded together. It is also preferred to impregnate the fiber with a resin which contains the elastic polymer (C) as an essential ingredient. The amount of the elastic polymer is preferably 2 to 120 wt%, more preferably 10 to 80 wt% based on the fiber assembly (2). Further, the sheet layer (2) is preferably composed of a fiber assembly of fine fibers and the elastic polymer (C) existent in a space between fibers of the fiber assembly like the sheet layer (1). The elastic polymer (C) is identical to the above elastic polymer (A) used in the sheet layer (1).

A grain layer composed of an elastic polymer or a napped layer of fine fibers may be formed on the surface (surface opposite to the surface to which the sheet layer (1) is bonded) which is the exterior side of a leather-like sheet product of the sheet layer (2) by a conventionally known method like the sheet layer (1).

The thickness and density of the sheet layer (2) are preferably as follows. First, the thickness $t_2$ (mm) of the sheet layer (2) is preferably 0.2 to 2.5 mm, more preferably 0.3 to 2.0 mm. When the thickness is smaller than 0.2 mm, the layer is too thin and not strong enough, or may be difficult to be processed substantially. When the thickness is larger than 2.5 mm, the layer is too thick, has a hard feel and may be limited in application. Further, the apparent density $\rho_2$ (g/cm$^3$) of the sheet layer (2) is preferably 0.20 to 0.48 g/cm$^3$, more preferably 0.23 to 0.45 g/cm$^3$. When the apparent density of the sheet layer (2) is smaller than 0.20 g/cm$^3$, the layer has a soft feel but not tight feel and may not be strong enough. When the apparent density is larger than 0.48 g/cm$^3$, the layer may have a hard feel.

The thicknesses and densities of the sheet layer (1) and the sheet layer (2) preferably satisfy the following expressions (1) to (6) at the same time.

$$0.20 \leqq \rho_1 \leqq 0.48 \tag{1}$$

$$0.20 \leqq \rho_2 \leqq 0.48 \tag{2}$$

$$0.5 \leqq \rho_1/\rho_2 \leqq 2.4 \tag{3}$$

$$0.2 \leqq t_1 \leqq 1.5 \tag{4}$$

$$0.2 \leqq t_2 \leqq 2.5 \tag{5}$$

$$0.4 \leqq (t_1 + t_2) \leqq 4.0 \tag{6}$$

Out of the above expressions, the expressions (1), (2), (4) and (5) show the thicknesses $t_1$ and $t_2$ (mm) and apparent densities $\rho_1$ and $\rho_2$ ($g/cm^3$) of the sheet layer (1) and the sheet layer (2), respectively.

Further, the expression (6) shows the total ($t_1 + t_2$) of the thickness $t_1$ (mm) of the sheet layer (1) and the thickness $t_2$ (mm) of the sheet layer (2), which is preferably 0.4 to 4.0, more preferably 0.4 to 3.6. When ($t_1 + t_2$) is smaller than 0.4. these layers are too thin and not strong enough, and may be difficult to be laminated together. When ($t_1 + t_2$) is larger than 4.0, these layer are too thick, have a hard feel and may be limited in application. Further, the expression (3) shows the ratio $\rho_1/\rho_2$ of the apparent density $\rho_1$ ($g/cm^3$) of the sheet layer (1) to the apparent density $\rho_2$ ($g/cm^3$) of the sheet layer (2), which is preferably 0.50 to 2.4, more preferably 1.00 to 2.0, particularly preferably 1.05 to 2.00. When $\rho_1/\rho_2$ is smaller than 0.50 or larger than 2.4, a dense feel of a low-density side decreases, the number of wrinkles may increase and a sense of difference is easily given due to a big difference in density.

The sheet layers (1) and (2) may be produced by preparing two thick sheets and slicing them into two or more layers or by slicing a single thick sheet. Since a thin nonwoven fabric having a thickness of 1 mm or less generally has low strength and low processability and cannot increase the line speed, its productivity is low. Therefore, it is preferred to form a thick sheet and slice it into the sheet layers (1) and (2) having a desired thickness.

The sheet layer (1) and the sheet layer (2) are bonded together by the adhesive layer composed of the elastic polymer (B). To bond together the sheet layer (1) and the sheet layer (2), an organic solvent solution or aqueous dispersion of the elastic polymer (B) is applied to the surface of one of the sheet layers and the coated sheet layer is laminated with the other sheet layer. The coating solution may contain various additives in limits that do not impair bonding. The amount of coating which depends on permeability into the substrate is preferably 20 to 500 $g/m^2$ in terms of dry weight.

The elastic polymer (B) for forming this adhesive layer maybe an elastic material of a polyurethane resin, polyacrylic acid resin, synthetic rubber or polyvinyl acetate resin. Out of these, the polyurethane resin is the most preferred from the viewpoint of the application of the leather-like sheet product of the present invention. The polyurethane resin is obtained by reacting a polyol with an organic diisocyanate in the presence of a low-molecular chain extender as will be described hereinafter. That is, the polyurethane resin is obtained by reacting a polyol having a molecular weight of 500 to 4,000 such as polyethylene glycol, polypropylene glycol, polytetramethylene glycol, polybutylene carbonate, polyhexamethylene carbonate, polyethylene adipate, polybutylene adipate or polyhexamethylene adipate with an organic diisocyanate such as diphenylmethane diisocyanate, tolylene diisocyanate, xylylene diisocyanate, 4,4'-dicyclohexylmethane diisocyanate or 3,3,5-trimethyl-5-isocyanatemethylcyclohexyl isocyanate in the presence of a low-molecular chain extender such as ethylene glycol, butylene glycol, xylylene glycol, propylenediamine, hexamethylenediamine, 4,4'-diaminodiphenylmethane, 3,3,5-trimethyl-5-aminomethylcyclohexylamine, 4,4'-diaminodicyclohexylmethane, hydrazine, amino acid hydrazide or dicarboxylic acid hydrazide. Further, it is preferred to use a polyfunctional isocyanate obtained by an addition reaction between tolylene diisocyanate or diphenylmethane diisocyanate and trimethylol propane as an organic isocyanate to obtain a crosslinked polyurethane resin in order to improve adhesion strength and solvent resistance. In this case, after the polyurethane resin is applied to any one of the sheet layers while it is not crosslinked and the sheet layers (1) and (2) are laminated together, aging is carried out until crosslinking ends to complete bonding. To shorten the aging time, various catalysts may be added to the coating solution.

The adhesive layer in the present invention means not only a layer composed of the elastic polymer (B) alone but also a layer having a higher density than other portions of the sheet layers which do not take part in bonding due to the existence of the elastic polymer (B) in some of spaces in the sheet layers (1) and (2). In the present invention, it is preferred that a layer composed of the elastic polymer (B) alone should not exist although there is an adhesive layer between the sheet layers (1) and (2). The average thickness of the adhesive layer composed of this elastic polymer (B) is preferably 0.01 to 0.5 mm. As for the physical properties of a film formed from this elastic polymer (B) alone, the 100 % elongation stress of the film is preferably 200 to 3,000 $N/cm^2$. The coating solution preferably contains a low-density substance such as air. In this case, the apparent density of a sheet formed from the coating solution is preferably 0.5 to 0.8 $g/cm^3$. When values of these characteristic properties are below their lower limits, such a problem as insufficient adhesion strength easily arises. When the values are beyond their upper limits, the feel tends to be hard.

In the adhesive layer of the present invention, although fibers of the sheet layer (1) and fibers of the sheet layer (2) penetrate in the adhesive layer at the respective interfaces, the fibers of the sheet layer (1) are existent in a state that they are substantially not bonded to the elastic polymer (B), the fibers of the sheet layer (2) are existent in a state that they are substantially bonded or not bonded to the elastic polymer (B), and further in the adhesive layer, the elastic polymer (B) is existent in a state that it is bonded to at least the elastic polymer (A) contained in the sheet layer (1) at the interface.

As described above, in the present invention, the elastic polymer (B) must be existent in the adhesive layer in a state that it is substantially not bonded to the fibers constituting the sheet layer (1). Meanwhile, the elastic polymer (B) may be bonded or not bonded to the fibers constituting the sheet layer (2) but preferably not bonded to the fibers.

The state that the elastic polymer (B) of the layer of the elastic polymer (B) is substantially not bonded to the fibers is a state that fine fibers or ordinary fibers which are not in contact with the elastic polymer (B) or not bonded to the elastic polymer (B) even when they are in contact with the elastic polymer (B) account for at least 50 % or more, preferably 80 % or more, more preferably 95 % or more of the total of all the fibers in the section of the sheet. Further, when a bundle of fine fibers is used as some of the fibers of the sheet layer, it is preferred that the elastic polymer (B) should not exist in the inside space of the bundle of fine fibers and should not be in contact with fine monofilaments contained in the bundle of fine fibers although the bundle of fine fibers penetrates in the elastic polymer (B) of the adhesive layer.

This structure is obtained by the following method, for example. That is, the sheet layer (1) composed of a sea-island type fiber from which a fine fiber can be made is formed, bonded by the adhesive layer composed of the elastic polymer (B), and treated with a solvent which does not dissolve the island component of the fine fiber and the elastic polymers of the sheet layers and the layer of the elastic polymer (B) and selectively dissolves the sea component of the fiber to remove the sea component of the sea-island type fiber. By this method, the sea component around the sea-island type fiber is dissolved and removed, whereby a structure that the elastic polymer (B) is not bonded to the fine fiber of the island component is formed though the elastic polymer (B) in the adhesive layer composed of the elastic polymer (B) is bonded to the elastic polymer (A) or (C) of the sheet layer. In this case, the elastic polymer (A) is not bonded to the fine fiber of the island component in the sheet layer as well, thereby improving a feel.

It is further preferred that the sheet layer (2) should be composed of a fiber assembly of sea-island type fibers made from at least two different polymer compositions which differ from each other in solvent solubility and the elastic polymer (C) existent in a space between fibers of the fiber assembly, like the sheet layer (1). Since the fine fiber of the island component of each of the sheet layers (1) and (2) is not bonded to the elastic polymers (A), (B) and (C) in this case, a structure that all the elastic polymers of the leather-like sheet product are not bonded to the fine fibers is thus formed.

Other methods for bonding not to the fiber but to other elastic polymer include one in which the surface of the fiber is treated with a silicone-based softening water repellent to prevent bonding between the elastic polymer and the fiber before the elastic polymer is applied and one in which a substance between the elastic polymer and the surface of the fiber is removed after the elastic polymer is bonded to other elastic polymer. The substance to be removed is a polyvinyl alcohol when the surface of the fiber is treated with the polyvinyl alcohol in advance or a sea component when a sea-island type fiber is used as the above fiber.

The elastic polymer (B) of the adhesive layer is preferably bonded to the elastic polymer (A) of the sheet layer (1) and the elastic polymer (C) of the sheet layer (2) which is impregnated with a resin at the respective interfaces to increase adhesive force between the sheet layer (1) and the sheet layer (2).

The leather-like sheet product of the present invention is preferably the following sheet product (I) or (II):

(I) A leather-like sheet product comprising (a) a sheet layer (1) composed of a fiber assembly (1) of fine fibers and an elastic polymer (A) existent in a space between fibers of the fiber assembly (1), (b) a sheet layer (2) composed of a fiber assembly (2) of fine fibers and an elastic polymer (C) existent in a space between fibers of the fiber assembly (2), and (c) an adhesive layer, composed of an elastic polymer (B), for bonding together the sheet layer (1) and the sheet layer (2), wherein

(d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially not bonded to the elastic polymer (B); and (e) the elastic polymer (B) is existent in the adhesive layer in a state that it is bonded to the elastic polymer (A) contained in the sheet layer (1) at the interface and to the elastic polymer (C) contained in the sheet layer (2) at the interface

(II) A leather-like sheet product comprising (a) a sheet layer (1) composed of a fiber assembly (1) of fine fibers and an elastic polymer (A) existent in a space between fibers of the fiber assembly (1), (b) a sheet layer (2) composed of a fiber assembly (2) of fine fibers and an elastic polymer (C) existent in a space between fibers of the fiber assembly (2), and (c) an adhesive layer, composed of an elastic polymer (B), for bonding together the sheet layer (1) and the sheet layer (2), wherein

(d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially bonded to the elastic polymer (B); and (e) the elastic polymer (B) is existent in the adhesive layer in a state that it is bonded to at least the elastic polymer (A) contained in the sheet layer (1) at the interface and to the elastic polymer (C) contained in the sheet layer (2) at the interface.

The leather-like sheet product of the present invention preferably has a leather-likeness index of 0.5 to 2.0. The term "leather-likeness index" is a value calculated from the following equation by measuring flexural resistance (RB), compressive stress (P3) and elastic recovery (ER) in accordance with measurement methods which will be described hereinafter.

$$\text{leather-likeness index} = \text{compressive stress (P3)}/(\text{flexural resistance (RB)} \times \text{elastic recovery (ER)})$$

As for the meaning of the leather-likeness index, as this value becomes greater, the product is softer and has larger compressive stress (higher tightness) and smaller elastic recovery. A large leather-likeness index means that the product has properties closer to natural leather.

To increase the leather-likeness index, flexural resistance (RB) and elastic recovery (ER) must be reduced and compressive stress (P3) must be increased. For example, in order to reduce the flexural resistance (RB) of the sheet product of the present invention, it is preferred that the elastic polymer (A) and the elastic polymer (C) should be existent in states that they are not bonded to the fibers of the sheet layer (1) and the fibers of the sheet layer (2). respectively, and that the elastic polymer (B) of the adhesive layer should interpose between the sheet layer (1) and the sheet layer (2). In order to increase compressive stress (P3), it is preferred that the apparent densities of the sheet layer (1) and the sheet layer (2), the thickness of the adhesive layer and the modulus of the resin should be set to the above appropriate values. Further, in order to reduce elastic recovery, it is preferred that the elastic polymer (A) and the fiber assembly in the sheet layer (1) should not be bonded to each other and/or the elastic polymer (C) and fibers in the sheet layer (2) should not be bonded to each other.

Further, when the leather-like sheet product of the present invention is to be used in shoes, the peel strength of the surface of the sheet product is preferably 20 N/cm or more, more preferably 25 N/cm or more. This peel strength is a value per 1 cm in width of peel strength obtained by laminating together two 2.5 cm x 9.0 cm sample pieces by a polyurethane adhesive in such a manner that their front surfaces become adjacent to each other and by making a peel test on the obtained laminate. In order to obtain satisfactory peel strength, it is important to fully increase the density of entangled fibers in a thickness direction of the fibers in the width of the sheet layer. For example, it is achieved by an effective fiber density obtained by a needle punching or fluid (water jet) entangling method. It is also important to improve adhesive force between the sheet layer (1) and the sheet layer (2) by the elastic polymer (B). For example, the elastic polymer (B) of the adhesive layer may be infiltrated into the sheet layer (1) and the sheet layer (2).

The surface of this leather-like sheet product may be napped by a conventionally known method, provided with a grain layer, dyed or the like. Although these treatments may be carried out in any step, they may be carried out after the sheet layers are bonded together by the adhesive layer to avoid the deformation of the substrate caused by tension. For example, when the surface is to be napped, it is preferred to buff and dye the product in the final step so as to protect the soft sheet and fine nap. When a grain surface structure is to be provided, it is effective to form a porous elastic polymer layer upon the impregnation of the surface of the sheet layer with the elastic polymer and/or to form a non-porous elastic polymer layer by coating in the final step. However, the present invention is not limited to these and the order may be changed, or other embossing and rubbing steps may be combined.

The thus obtained leather-like sheet product has excellent stay properties like natural leather and yet good balance between softness and buckling resistance and is deformed round with fine wrinkles when it is bent and particularly suitable for use in furniture and shoes. The process of the present invention is a production process which suppresses shrinkage in width during processing without reducing the quality of a soft substrate.

Effect of the Invention

The present invention provides a leather-like sheet product having leather-like properties with a large leather-likeness index in which a sheet layer (1) and a sheet layer (2) both containing a fiber assembly are bonded together by an adhesive layer composed of an elastic polymer (B) so that the adhesive layer is existent as an intermediate layer of the leather-like sheet product and functions as an intermediate layer against the bending deformation of the sheet, and tensile stress and compressive stress (P3) upon large deformation can be made large without increasing flexural resistance (RB) and elastic recovery (ER) upon small deformation, compared with a sheet product composed of only a fiber assembly and an elastic polymer without an adhesive layer.

There is a layer in which elongation deformation (portion curved outward) and compression deformation (portion compressed inward) do not occur in a sheet when the sheet is deformed by bending in terms of the strength of materials. The expression "intermediate layer" as used herein means this layer.

Since flexural resistance is expressed by an integral value of the product of the distance from the intermediate layer and stress at that position on the flexural section of the sheet, even if a high-modulus and high-density layer is existent near the intermediate layer, flexural resistance (RB) upon small deformation is not impaired.

Meanwhile, since force for bending and compressing the sheet strongly to increase bending deformation and compressive stress (P3) upon large deformation increase in proportion to density, a product having leather-like properties closer to natural leather having a soft and tight feel can be obtained by the existence of an adhesive layer having a higher density than the sheet layers as an intermediate layer.

Further, since the elastic polymer (B) of the adhesive layer penetrates in the sheet layer (1) but is not bonded to the fibers of the sheet layer (1), it is possible to obtain a leather-like sheet product retaining softness and adhesive strength.

Owing to the existence of this adhesive layer, elongation in a lengthwise direction and shrinkage in a breadthwise direction caused by tension generated during processing can be suppressed in the steps after bonding, in addition to the above excellent softness and buckling resistance.

Examples

The following examples and comparative examples are provided for the purpose of further illustrating the present invention but are in no way to be taken as limiting. Measurement values in the examples and comparative examples were obtained by the following methods.

1) thickness

This was measured in accordance with the JIS K 6505 method except that a measuring instrument having a flat and round pressure surface with a diameter of 10 mm and a pressure load of 11.8 KPa (120 gf/cm$^2$) was used.

2) weight

This was obtained by measuring weight in accordance with the JIS K 6505 method and calculating a value per 1 m$^2$ from the weight. The unit is g/m$^2$.

3) density

The apparent density was calculated from the above measurement values of thickness and weight.

4) 5 % stress (elongation load), 20 % stress (elongation load), tensile strength, elongation stress

These were measured in accordance with the JIS K6505 method.

5) flexural resistance (RB)

A 2.5 cm x 9.0 cm sample piece was fixed to a fixing tool at a position 2.0 cm away from one end thereof. The resiliency of the sample when the sample was bent at 90° to a curvature radius of 2 cm at a position 2.0 cm away from the other end of the sample was measured and a value per 1 cm in width of the sample piece was obtained from this value and taken as flexural resistance (unit; N/cm).

6) compressive stress (P3)

A 2.5 cm x 9.0 cm sample piece was bent into two at the center and set in a constant-speed compression tester. The head of the compression tester was lowered at a rate of 1 cm/min to bend, compress and deform the sample and measure compression when the sample was compressed to an interval 3 times its thickness, and a value per 1 cm in width calculated from the measurement value was taken as compression force (unit; N/cm).

7) elastic recovery (ER)

A 1 cm (width) x 9 cm (length) sample piece was bent into two and placed under a load of 49.03 N/cm, the load was removed after 1 hour, and the opening angle θ of the sample piece after 30 seconds was measured to obtain elastic recovery from the following equation.

$$\text{elastic recovery} = (\theta/180) \times 100$$

8) leather-likeness index

This was obtained from the above measurement values of flexural resistance (RB), compressive stress (P3) and elastic recovery (ER) according to the following equation.

$$\text{leather-likeness index} = P3/(RB \times ER)$$

9) peel strength (peel strength of surface of sheet product)

This is a value per 1 cm in width of peel strength obtained by laminating a PVC sheet lined with a plain weave fabric of the same size as the sheet on the front side of a 2.5 cm (width) x 9.0 cm (length) sample piece by an adhesive (Ulock 420 of Hirono Kagaku Kogyo Co., Ltd., containing 2 wt% of Coronate L of Nippon Polyurethane Industry Co., Ltd.) and by making a peel test on this laminate.

10) average thickness of adhesive layer

The thickness of an adhesive layer was measured at 5 points from a photo of the section of the layer taken by a scanning electron microscope and the mean value of these measurement data was taken as the average thickness of the adhesive layer.

11) bonding/non-bonding between elastic polymer and fiber

A photo of the section of a sample was taken by a scanning electron microscope to observe a space between fibers and the elastic polymer. Bonding between the elastic polymer (A), the elastic polymer (C) contained in the substrate or the elastic polymer (B) of the adhesive layer and the fiber was observed. When the elastic polymer is adhered to the entire surface of the fiber, it is considered that the elastic polymer is bonded to the fiber. When the area of the space is larger than the section of the fiber, it is considered that the elastic polymer is not bonded to the fiber even though the elastic polymer is contacted to part of the fiber.

12) existence of elastic polymer in bundle of fine fibers

When the fiber is a bundle of fine fibers, a photo of the section of the fiber is taken by a scanning electron microscope to observe the existence of the elastic polymer in the bundle of fine fibers. The expression "in the bundle of fine fibers" means a space surrounded by the outermost fine fibers out of a large number of fine fibers produced from a single fiber before a fine fiber are made. When the elastic polymer is existent around the fine fibers and the existence of the fiber before a fine fiber is made cannot be recognized, it is considered that the elastic polymer is existent in the bundle of fine fibers.

Reference Example 1 (preparation of unextracted sheet (1))

Nylon-6 and low-density polyethylene were mixed in a ratio of 50:50, the obtained mixture was spun into fiber, the fiber was stretched in a hot water bath at 60°C to 3 times its original size, mechanically crimped and cut to obtain a fiber having a fineness of 4.4 dtex and a size of 51 mm. This fiber was carded, cross layered or needle punched to obtain a needle punched web having a weight of 412 g/m$^2$. This web was heated in the chamber of a hot air drier set at 140° C for 3 minutes and let pass between cooling rolls at 35°C to prepare a nonwoven fabric (1) having a thickness shown in Table 1. The web weight, thickness and apparent density of the fabric are shown in Table 1.
Thereafter, an impregnating solution containing 100 parts of a dimethylformamide solution (resin concentration of 15 %) of a polyether-ester polyurethane resin having a 100 % elongation stress of 780 N/cm$^2$ (corresponding

to the elastic polymer (A) or the elastic polymer (C)), 0.5 part of a hydrophilic coagulation modifier (FG-10 of Matsumoto Yushi-Seiyaku Co., Ltd.) and 0.5 part of a hydrophobic coagulation modifier (FG-12 of Matsumoto Yushi-Seiyaku Co., Ltd.) was prepared. The above nonwoven fabric (1) was immersed in the above impregnating solution, an excess of the impregnating solution was removed by squeezing, and the impregnating solution was wet coagulated in a 15 % aqueous solution of dimethylformamide heated at 40°C. The impregnated fabric was washed in water and dried to obtain an impregnated substrate (1). The amount of the impregnating resin after drying is also shown in Table 1.

This impregnated substrate (1) was sliced into two sheets at a position where the thickness was 1/2. These were designated as unextracted sheets (1).

As reference data, the physical properties after extraction of the sheet (1) were measured. That is, an immersion-nipping step that the unextracted sheet (1) which was not laminated by an adhesive was immersed in toluene heated at 85° C and nipped at an interval which was 60 % of the thickness of the sheet was repeated to extract and remove polyethylene. This was introduced into hot water heated at 90°C to remove toluene and dried in the end. The weight, thickness and apparent density after extraction of this sheet (1) are shown in Table 1. The final weight after extraction of the sheet (1) was 165 g/m$^2$.

Reference Example 2 (preparation of unextracted sheet (2))

The procedure of Reference Example 1 was repeated except that the web weight was 294 g/m$^2$ to obtain a sliced unextracted sheet (2). The web weight, thickness and apparent density of a nonwoven fabric and the amount of the impregnating resin after drying of an impregnated substrate are shown in Table 1.

As reference data, the weight, thickness and apparent density after extraction of the sheet (2) were obtained in the same manner as in Reference Example 1 and are shown in Table 1. The final weight after extraction was 132 g/m$^2$.

Reference Example 3 (preparation of unextracted sheet (3))

The procedure of Reference Example 1 was repeated except that the web weight was 572 g/m$^2$ to obtain a sliced unextracted sheet (3). The web weight, thickness and apparent density of a nonwoven fabric and the amount of the impregnating resin after drying of an impregnated substrate are shown in Table 1.

As reference data, the weight, thickness and apparent density after extraction of the sheet (3) were obtained in the same manner as in Reference Example 1 and are shown in Table 1. The final weight after extraction was 200 g/m$^2$.

Reference Example 4 (preparation of unextracted sheet (4))

The procedure of Reference Example 1 was repeated except that slicing was not carried out to obtain an unextracted sheet (4). The web weight, thickness and apparent density of a nonwoven fabric and the amount of the impregnating resin after drying of an impregnated substrate are shown in Table 1.

As reference data, the weight, thickness and apparent density after extraction of the sheet (4) were obtained in the same manner as in Reference Example 1 and are shown in Table 1. The final weight after extraction was 330 g/m$^2$.

Table 1

| | | | R.Ex.1 | R.Ex.2 | R.Ex.3 | R.Ex.4 |
|---|---|---|---|---|---|---|
| sheet No. before extraction | | | sheet (1) | sheet (2) | sheet (3) | sheet (4) |
| used nonwoven fabric* | web weight $(g/m^2)$ | | 412/2 | 294/2 | 572/2 | 412 |
| | thickness (mm) | | 1.33/2 | 1.43/2 | 1.25/2 | 1.33 |
| | density $(g/cm^3)$ | | 0.310 | 0.206 | 0.458 | 0.310 |
| amount of impregnating resin (dry)* $(g/m^2)$ | | | 124/2 | 118/2 | 114/2 | 124 |
| sliced/not sliced | | | sliced | sliced | sliced | not sliced |
| physical properties of sheet layer after extraction | web weight $(g/m^2)$ | | 165 | 132 | 200 | 330 |
| | thickness (mm) | | 0.52 | 0.52 | 0.51 | 1.00 |
| | density $(g/cm^3)$ | | 0.317 | 0.254 | 0.392 | 0.330 |

R.Ex.: Reference Example

* When a sliced sheet is used, the weight and thickness of an used nonwoven fabric and the amount of an impregnating resin are obtained by dividing the values before slicing by 2.

EP 1 167 619 B1

Reference Example 5 (preparation of unextracted sheet (5) having a grain layer)

A solution containing 100 parts of a dimethylformamide solution (resin concentration of 20 %) of a polyether-polyester urethane resin having a 100 % elongation stress of 1,080 N/cm$^2$, 0.5 part of a hydrophilic coagulation modifier (FG-10 of Matsumoto Yushi-Seiyaku Co., Ltd.) and 0.5 part of a hydrophobic coagulation modifier (FG-12 of Matsumoto Yushi-Seiyaku Co., Ltd.) was prepared and defoamed to obtain a coating solution having no air bubbles.

The nonwoven fabric (1) obtained in Reference Example 1 was immersed in the impregnating solution prepared in Reference Example 1, an excess of the impregnating solution was removed by squeezing, the above coating solution was applied to the fabric to a wet weight of 300 g/m$^2$ and wet coagulated in a 15 % aqueous solution of dimethylformamide heated at 40° C. The fabric was washed in water and dried to obtain an impregnated substrate (5) having a grain layer,

This substrate was sliced into two sheets at a position where the thickness was 1/2 and these sheets were designated as the upper layer and lower layer of the unextracted sheet (5).

As reference data, the physical properties after extraction of the upper layer and lower layer of the sheet (5) were measured. That is, an immersion-nipping step that the unextracted sheets which were not laminated together yet by an adhesive were immersed in toluene heated at 85°C and nipped at intervals equivalent to 60 % of the thickness of the sheet was repeated to remove polyethylene by extraction. This was introduced into hot water heated at 90°C to remove toluene and dried in the end. The thicknesses, weights and apparent densities after extraction of the upper layer and lower layer of the sheet (5) are shown in Table 2.

Reference Example 6 (preparation of unextracted sheet (6) having a grain layer)

The procedure of Reference Example 5 was repeated except that slicing was not carried out. The thickness and density of a nonwoven fabric before the impregnation of a resin and the amount of the impregnating resin are shown in Table 2.

The impregnated substrate (5) having a grain layer of Reference Example 5 was used as an unextracted sheet (6) without slicing.

As reference data, the thickness, weight and apparent density of this sheet after it was extracted directly are shown in Table 2.

Table 2

| sheet No. before extraction | | R.Ex.5 the upper layer<br>the upper layer of the sheet (5) | R.Ex.5 the lower layer<br>the lower layer of the sheet (5) | R.Ex.6<br>sheet (6) |
|---|---|---|---|---|
| used nonwoven fabric* | web weight $(g/m^2)$ | 412/2 | 412/2 | 412 |
| | thickness (mm) | 1.33/2 | 1.33/2 | 1.33 |
| | density $(g/cm^3)$ | 0.310 | 0.310 | 0.310 |
| amount of impregnating resin (dry)* $(g/m^2)$ | | 108/2 | 108/2 | 108 |
| amount of coating resin (dry) $(g/m^2)$ | | 60 | - | 60 |
| sliced/not sliced | | sliced | sliced | not sliced |
| physical properties of sheet layer after extraction | weight $(g/m^2)$ | 201 | 173 | 375 |
| | thickness (mm) | 0.59 | 0.61 | 1.13 |
| | density $(g/cm^3)$ | 0.341 | 0.284 | 0.332 |

R.Ex.: Reference Example

* When a sliced sheet was used, the weight and thickness of the used nonwoven fabric and the amount of an impregnating resin are obtained by dividing the values before slicing by 2.

(In the case of a coated product, as it is sliced in a thickness direction, the above figures differ from the actual figures.)

EP 1 167 619 B1

Reference Example 7 (preparation of unextracted sheet (7))

The procedure of Reference Example 1 was repeated except that the web weight was 420 g/m$^2$ to obtain a sliced unextracted sheet (7). The web weight, thickness and apparent density of a nonwoven fabric and the amount of an impregnating resin after drying of the impregnated substrate are shown in Table 3.

As reference data, the weight, thickness and apparent density after extraction of the sheet (7) were obtained in the same manner as in Reference Example 1 and shown in Table 3. The final weight after extraction of the sheet was 188 g/m$^2$.

Reference Example 8 (preparation of sheet (8))

A peel and division type composite fiber which comprised polyethylene terephthalate as a first component and nylon-6 as a second component and had a 16 divided gear-like cross section was melt spun, stretched to 2.0 times in hot water heated at 40°C, mechanically crimped and cut to obtain a thermally shrunk, peel and division type composite fiber having a fineness of 3.3 dtex, a size of 45 mm and a hot water shrinkage factor of 9.5 %. The volume ratio of the both components was 50 : 50 and each of the both components was divided into 16 segments by the other component. This was carded, cross-layered, needle punched or entangled by a jet stream to obtain a web having a weight of 286 g/m$^2$. Further, this web was immersed in a hot water tank heated at 75°C for 20 seconds to shrink a polyethylene terephthalate fiber to reduce its area by 21 % and dried with a hot air drier heated at 110°C to obtain a nonwoven fabric (8) having a thickness shown in Table 3.

Thereafter, an impregnating solution comprising 100 parts of a dimethylformamide solution (resin concentration of 10 %) of a polyether-ester polyurethane resin (corresponding to the elastic polymer (A) or the elastic polymer (C)) having a 100 % elongation stress of 1,030 N/cm$^2$, 0.5 part of a hydrophilic coagulation modifier (FG-10 of Matsumoto Yushi-Seiyaku Co., Ltd.) and 0.5 part of a hydrophobic coagulation modifier (FG-12 of Matsumoto Yushi-Seiyaku Co., Ltd.) was prepared. The nonwoven fabric (8) was immersed in the above impregnating solution, an excess of the impregnating solution was removed by squeezing, and the fabric was wet coagulated in a 15 % aqueous solution of dimethylformamide heated at 40° C. This fabric was washed in water and dried to obtain an impregnated substrate (8). The amount of the impregnating resin after drying is shown in Table 3.

This impregnated substrate (8) was sliced into two sheets at a position where the thickness was 1/2. The sheets were designated as sheets (8).

## Table 3

| | | R.Ex.7 | R.Ex.8 |
|---|---|---|---|
| sheet No. before extraction | | sheet (7) | sheet (8) |
| used nonwoven fabric* | web weight $(g/m^2)$ | 500/2 | 362/2 |
| | thickness (mm) | 1.50/2 | 1.08/2 |
| | density $(g/cm^3)$ | 0.333 | 0.335 |
| amount of impregnating resin (dry)* $(g/cm^2)$ | | 126.2 | 76/2 |
| sliced/not sliced | | sliced | sliced |
| physical properties of sheet layer after sliced | web weight $(g/m^2)$ | 313 | 219 |
| | thickness (mm) | 0.75 | 0.54 |
| | density $(g/cm^3)$ | 0.417 | 0.406 |
| physical properties of sheet layer after extraction | web weight $(g/m^2)$ | 188 | - |
| | thickness (mm) | 0.61 | - |
| | density $(g/cm^3)$ | 0.294 | - |

R.Ex.: Reference Example

* When a sliced sheet is used, the weight and thickness of an used nonwoven fabric and the amount of an impregnating resin are obtained by dividing the values before slicing by 2.

EP 1 167 619 B1

Example 1

An adhesive composition (1) comprising 50 parts of Crisbon TA-290 (polyurethane resin of Dainippon Ink and Chemicals, Inc., concentration of 45 %), 50 parts of Crisbon TA-265 (polyurethane resin of Dainippon Ink and Chemicals, Inc., concentration of 65 %), 12 parts of Coronate 2094 (crosslinking agent of Nippon Polyurethane Industry Co., Ltd.), 3 parts of Crisbon Accel-T (catalyst of Dainippon Ink and Chemicals, Inc.) and 20 parts of methyl ethyl ketone was prepared as an adhesive essentially composed of polyurethane resins (corresponding to the elastic polymer (B)). The apparent density of a film formed by applying this adhesive composition (1) to release paper, drying and aging was 1.15 g/cm$^3$ and 100 % elongation stress thereof was 294 N/cm$^2$.

The two sliced unextracted sheets of Reference 1 were used, the adhesive composition (1) was applied to the sliced surface of one of them to a wet weight of 200 g/m$^2$ which was then placed upon the other with the sliced surfaces adjacent to each other and let pass between nip rolls arranged at an interval which was 85 % of the total thickness of the sheets before slicing to be laminated together, and the obtained laminate was rolled and aged at 60°C for 48 hours.

When the average thickness of the elastic polymer (B) layer was measured, it was 0.06 mm.

An immersion-nipping step that this sheet was immersed in toluene heated at 85°C and nipped at intervals which were 60 % of the thickness of the sheet was then repeated to remove polyethylene contained in the fibers by extraction. This was introduced into hot water heated at 90°C to remove toluene and dried in the end. The obtained sheet had large resistance to tension with a shrinkage in width of 3 % or less than that of before extraction and an elongation in length of 2 % or less than that of before extraction and excellent production stability.

Dimethylformamide was applied to one side of the obtained sheet by a 200-mesh gravure roll, dried and buffed by a polisher having 400-mesh emery paper to obtain a napped substrate which was then dyed by a jet dyeing machine.

The obtained sheet was soft and anti-buckling, had a high leather-likeness index, fine nap on the surface and an excellent writing effect and was very similar to natural leather nubuck.

When the sheet was observed through an electron microscope, the elastic polymer (B) penetrated in the sheet layer (1) and the sheet layer (2) and all the elastic polymers including the elastic polymer (B) were substantially not bonded to the fibers constituting the sheet layer (1) and the sheet layer (2). The bundle of fine fibers penetrated in the elastic material (B) layer but all the elastic polymers including the elastic polymer (B) were not existent in the inside space of the bundle of fine fibers. The elastic polymer (B) was bonded to the elastic polymers constituting the sheet layers.

The characteristic property values of the obtained sheet are shown in Table 4.

Examples 2 and 3

The procedure of Example 1 was repeated except that the two sliced unextracted sheets (2) of Reference Example 2 or the two sliced unextracted sheets (3) of Reference Example 3 were used in place of the two unextracted sheets (1) of Reference Example 1.

When the obtained sheet was observed through an electron microscope, the relationship between the elastic polymers and fibers constituting the sheet layers was the same as in Example 1.

The characteristic property values of the obtained sheet are shown in Table 4.

Comparative Example 1

The one unsliced unextracted sheet (4) of Reference Example 4 was extracted, napped and dyed in the same manner as in Example 1 in place of the two sliced unextracted sheets (1) of refenrece Example 1 adhered to be used.

The characteristic property values of the obtained sheet are shown in Table 4.

Compared with Example 1, the sheet greatly deformed with an elongation in length of 6 % and a shrinkage in width of 10 % in the extraction step, had no full and tight feel and was inferior in buckling resistance and leather-likeness index though it was soft.

Table 4

| | | | Ex.1 | Ex.2 | Ex.3 | C.Ex.1 |
|---|---|---|---|---|---|---|
| sheet layer | weight (upper layer + lower layer) | g/m$^2$ | 165+165 | 132+132 | 200+200 | 330 |
| | density ratio | $\rho1/\rho2$ | 1.00 | 1.00 | 1.00 | - |
| adhesive layer | 100 % elongation stress of film | N/cm$^2$ | 294 | 294 | 294 | - |
| | amount of coating (dry weight) | g/m$^2$ | 80 | 80 | 80 | - |
| | average thickness | mm | 0.06 | 0.06 | 0.06 | - |
| leather-like sheet product | thickness | mm | 1.05 | 1.05 | 1.03 | 1.00 |
| | weight | g/m$^2$ | 410.0 | 330.0 | 480.0 | 330.0 |
| | density | g/cm$^3$ | 0.390 | 0.314 | 0.466 | 0.330 |
| | 5 % stress($\delta5$) | length N/cm | 3.23 | 3.43 | 2.35 | 1.67 |
| | | width N/cm | 1.96 | 1.96 | 1.47 | 1.47 |
| | 20 % stress($\delta20$) | length N/cm | 20.87 | 29.11 | 17.64 | 11.27 |
| | | width N/cm | 14.50 | 10.19 | 9.51 | 8.33 |
| | tensile strength | length N/cm | 124.46 | 114.66 | 138.18 | 111.72 |
| | | width N/cm | 110.74 | 105.84 | 129.36 | 86.24 |
| | flexural resistance(RB) | length N/cm | 0.0024 | 0.0029 | 0.0020 | 0.0026 |
| | compressive stress(P3) | length N/cm | 0.21 | 0.23 | 0.24 | 0.11 |
| | elastic recovery(ER) | length % | 80.0 | 80.7 | 78.0 | 87.0 |
| | leather-likeness index P3/(RB·ER) | | 1.11 | 0.95 | 1.54 | 0.47 |
| | $\delta20/\delta5$ | length | 6.5 | 8.5 | 7.5 | 6.8 |
| | | width | 7.4 | 5.2 | 6.5 | 5.7 |
| | peel strength | N/cm | 25.5 | 27.5 | 24.5 | 25.5 |
| | bonding between elastic polymer and fibers | | no bonding | no bonding | no bonding | (no bonding)* |
| | existence of elastic polymer in bundle of fine fibers | | not existent | not existent | not existent | (not existent)* |

Ex.: Example        C.Ex.: Comparative Example

* Comparative Example 1 has no elastic polymer (B) layer.

EP 1 167 619 B1

Example 4

An adhesive composition (2) comprising 30 parts of Crisbon TA-290 (polyurethane resin of Dainippon Ink and Chemicals, Inc., concentration of 45 %), 30 parts of Crisbon TA-265 (polyurethane resin of Dainippon Ink and Chemicals, Inc., concentration of 65 %), 40 parts of Crisbon NB-765 (polyurethane resin of Dainippon Ink and Chemicals Inc., concentration of 30 %), 30 parts of Coronate 2094 (crosslinking agent of Nippon Polyurethane Industry Co., Ltd.), 3 parts of Crisbon Accel-T (catalyst of Dainippon Ink and Chemicals, Inc.) and 20 parts of methyl ethyl ketone was prepared as an adhesive essentially composed of polyurethane resins (corresponding to the elastic polymer (B)). The 100 % elongation stress of a film formed by applying this adhesive composition (2) to release paper, drying and aging was 588 N/cm$^2$. The laminate was obtained in the same manner as in Example 1 except that the unextracted sheet (3) of Reference Example 3 as an upper layer and the unextracted sheet (4) of Reference Example 4 as a lower layer were laminated together by the above adhesive composition (2), and the obtained laminate was extracted, napped and dyed.
When the obtained sheet was observed through an electron microscope, the relationship between the elastic polymers and fibers constituting the sheet layers was the same as in Example 1.
The obtained sheet was anti-buckling and had a high leather-likeness index and was therefore excellent as a material for shoes. The characteristic property values of the obtained sheet are shown in Table 5.

Example 5

An adhesive composition (3) comprising 15 parts of Crisbon TA-290 (polyurethane resin of Dainippon Ink and Chemicals, Inc., concentration of 45 %), 15 parts of Crisbon TA-265 (polyurethane resin of Dainippon Ink and Chemicals, Inc., concentration of 65 %), 80 parts of Crisbon NB-765 (polyurethane resin of Dainippon Ink and Chemicals Inc., concentration of 30 %), 8 parts of Coronate 2094 (crosslinking agent of Nippon Polyurethane Industry Co., Ltd.), 3 parts of Crisbon Accel-T (catalyst of Dainippon Ink and Chemicals, Inc.) and 20 parts of methyl ethyl ketone was prepared as an adhesive essentially composed of polyurethane resins (corresponding to the elastic polymer (B)). The 100 % elongation stress of a film formed by applying this adhesive composition (3) to release paper, drying and aging was 883 N/cm$^2$.
The laminate was obtained in the same manner as in Example 1 except that the unextracted sheet (3) of Reference Example 3 as an upper layer and the unextracted sheet (4) of Reference Example 4 as a lower layer were laminated together by the above adhesive composition (3), and the obtained laminate was extracted, napped and dyed.
When the obtained sheet was observed through an electron microscope, the relationship between the elastic polymers and fibers constituting the sheet layers was the same as in Example 1.
The obtained sheet was anti-buckling and had a high leather-likeness index and was therefore excellent as a material for shoes. The characteristic property values of the obtained sheet are shown in Table 5.

Example 6

The procedure of Example 1 was repeated except that the unextracted sheet (3) of Reference Example 3 was used as an upper layer and the unextracted sheet (2) of Reference Example 2 was used as a lower layer in place of the two unextracted sheets (1) of Reference Example 1. The average thickness of the elastic polymer (B) layer was 0.08 mm, and the obtained sheet had a fine nubuck-like surface appearance and was very soft and suitable for use in shoes and furniture as a leather-like sheet product. When it was observed through an electron microscope, the relationship between the elastic polymers and fibers constituting the sheet layers was the same as in Example 1. The characteristic properties of the obtained sheet are shown in Table 5.

Example 7

The procedure of Example 6 was repeated except that an adhesive containing air bubbles was prepared by stirring at a high speed at the same time of blowing air into an adhesive composition with using an air foamer and was used in place of the adhesive composition (1). The average thickness of the elastic polymer (B) layer was 0.10 mm and the apparent density of a sheet formed only from this adhesive containing air bubbles was 0.6 g/cm$^3$. When the sheet was observed through an electron microscope, the relationship between the elastic bodies and fibers constituting the sheet layers was the same as in Example 1. The characteristic properties of the obtained sheet are shown in Table 5.

Example 8

The procedure of Example 6 was repeated except that a sheet having a thickness of 0.45 mm and a substrate density of 0.44 g/cm$^3$ was formed by processing the unextracted sheet (3) of Reference Example 3 with a press roll heated at 100°C and used as an upper layer in stead of using the unextracted sheet (3) of Reference Example 3 directly. The obtained sheet had slight surface hardness but was anti-buckling and was excellent as a material for shoes. When it was observed through an electron microscope, the relationship between the elastic polymers and fibers constituting the sheet layers was the same as in Example 1. The characteristic properties of the obtained sheet are shown in Table 5.

## Table 5

| | | | Ex.4 | Ex.5 | Ex.6 | Ex.7 | Ex.8 |
|---|---|---|---|---|---|---|---|
| sheet layer | weight (upper layer + lower layer) | g/m$^2$ | 200+330 | 200+330 | 200+132 | 200+132 | 200+132 |
| | density ratio | ρ1/ρ2 | 1.19 | 1.19 | 1.54 | 1.54 | 1.75 |
| adhesive layer | 100 % elongation stress of film | N/cm$^2$ | 588 | 833 | 294 | 294 | 294 |
| | amount of coating (dry weight) | g/m$^2$ | 120 | 118 | 100 | 60 | 98 |
| | average thickness | mm | 0.16 | 0.15 | 0.08 | 0.10 | 0.08 |
| leather-like sheet product | thickness | mm | 1.60 | 1.60 | 1.11 | 1.12 | 1.05 |
| | weight | g/m$^2$ | 650.0 | 648.0 | 432.0 | 392.0 | 430.0 |
| | density | g/cm$^3$ | 0.406 | 0.405 | 0.389 | 0.350 | 0.410 |
| | 5 % stress($\delta$5) | length N/cm | 5.19 | 5.68 | 3.14 | 2.74 | 3.43 |
| | | width N/cm | 2.94 | 3.43 | 2.35 | 2.16 | 2.74 |
| | 20 % stress($\delta$20) | length N/cm | 43.61 | 45.08 | 27.44 | 25.48 | 28.42 |
| | | width N/cm | 15.29 | 16.17 | 13.72 | 13.52 | 14.70 |
| | tensile strength | length N/cm | 160.72 | 163.66 | 156.80 | 153.86 | 154.84 |
| | | width N/cm | 154.84 | 159.74 | 150.92 | 149.94 | 150.92 |
| | flexural resistance(RB) | length N/cm | 0.0073 | 0.0078 | 0.0039 | 0.0036 | 0.0047 |
| | compressive stress(P3) | length N/cm | 0.40 | 0.44 | 0.25 | 0.23 | 0.31 |
| | elastic recovery(ER) | length % | 80.7 | 80.0 | 80.0 | 79.0 | 79.0 |
| | leather-likeness index P3/(RB·ER) | | 0.69 | 0.70 | 0.78 | 0.79 | 0.84 |
| | $\delta$20/$\delta$5 | length | 8.4 | 7.9 | 8.8 | 9.3 | 8.3 |
| | | width | 5.2 | 4.7 | 5.8 | 6.3 | 5.4 |
| | peel strength | N/cm | 24.5 | 24.5 | 27.5 | 19.6 | 27.5 |
| | bonding between elastic polymer and fibers | | no bonding | no bonding | no bonding | no bonding | no bonding |
| | existence of elastic polymer in bundle of fine fibers | | not existent | not existent | not existent | not existent | not existent |

Ex.: Example

EP 1 167 619 B1

Example 9

Bonding and extraction were carried out in the same manner as in Example 1 except that the two sliced unextracted sheets (5) of Reference Example 5 were used in place of the two sliced unextracted sheets (1) of Reference Example 1.

The obtained sheet had large resistance to tension with a shrinkage in width of 3 % or less and an elongation in length of 2 % or less in the extraction step and had excellent production stability.

The surface having coating layer of the obtained sheet was embossed to provide a grain pattern, the surface finished with a polyurethane resin having a 100 % elongation stress of 392 $N/cm^2$ by a 200-mesh gravure roll and rubbed after adding a softening agent.

When the obtained sheet was observed through an electron microscope, the relationship between the elastic polymers and fibers constituting the sheet layers was the same as in Example 1.

The obtained sheet having a grain layer was soft and anti-buckling, had a high leather-likeness index, finely wrinkles on the surface when it was bent and was very similar to natural leather having a high-grade grain layer. The characteristic property values of the obtained sheet are shown in Table 5.

Comparative Example 2

Extraction and subsequent steps were carried out in the same manner as in Example 9 except that one unsliced unextracted sheet (6) of Reference Example 6 was used in place of the two sliced unextracted sheets (5) of Reference Example 5 adhered to be used. The thickness and density of a non-woven fabric before the impregnation of a resin, the amount of the impregnating resin, and the thickness, weight and apparent density after extraction of the fabric are shown in Table 6. The characteristic property values of the finally obtained sheet are shown in Table 6.

The obtained sheet having a grain layer greatly deformed with a shrinkage in width of 10 % or more and an elongation in length of 7 % in the extraction step compared with Example 9, was very soft without a full and tight feel and inferior in anti-buckling and leather-likeness index. The sheet was inferior as a sheet having a grain layer because large wrinkles were formed on the surface when it was bent. The characteristic property values of this sheet are shown in Table 6.

Example 10

The same adhesive composition (1) as in Example 1 was applied to the sliced surface of the sheet (8) (corresponding to the sheet layer (2)) obtained in Reference Example 8 to a wet weight of 230 $g/m^2$, and the sheet (8) was placed upon the sliced surface of the unextracted sheet (7) (corresponding to the sheet layer (1)) obtained in Reference Example 7 and laminated together in the same manner as in Example 1. The average thickness of the adhesive layer was 0.07 mm. Polyethylene was removed from this substrate by extraction with toluene heated at 85°C in the same manner as in Example 1. The obtained substrate had large resistance to tension with a shrinkage in width of 3 % or less and an elongation in length of 2 % or less in the extraction step and had excellent production stability.

Dimethylformamide was applied to the surface corresponding to the sheet layer (1) (unextracted sheet (7)) of the obtained sheet by a 200-mesh gravure roll, dried and buffed by a polisher having 400-mesh emery paper to form a napped substrate which was then dyed by a jet dyeing machine.

The obtained sheet was soft and anti-buckling, had a high leather-likeness index, fine nap on the surface and an excellent writing effect, and was similar to natural leather nubuck.

When the obtained sheet was observed through an electron microscope, the elastic polymer (B) penetrated in the sheet layer (1) and the sheet layer (2) and the elastic polymer (A) and the elastic polymer (B) were substantially not bonded to the fibers constituting the sheet layer (1). The bundle of fine fibers constituting the sheet layer (1) penetrated in the elastic polymer (B) but the elastic polymer (A) and the elastic polymer (B) were not existent in the inside space of the bundle of fine fibers. The elastic polymer (B) was bonded to the elastic polymers constituting the sheet layers.

The characteristic property values of the obtained sheet are shown in Table 6.

## Table 6

| | | | Ex.9 | C.Ex.2 | Ex.10 |
|---|---|---|---|---|---|
| sheet layer | weight (upper layer + lower layer) | g/m$^2$ | 201+173 | 375 | 188+219 |
| | density ratio | ρ1/ρ2 | 1.20 | - | 0.72 |
| adhesive layer | 100 % elongation stress of film | N/cm$^2$ | 294 | - | 294 |
| | amount of coating (dry weight) | g/m$^2$ | 58 | - | 80 |
| | average thickness | mm | 0.06 | - | 0.07 |
| leather-like sheet product | thickness | mm | 1.23 | 1.13 | 1.15 |
| | weight | g/m$^2$ | 432.0 | 375.0 | 487.0 |
| | density | g/cm$^3$ | 0.351 | 0.332 | 0.423 |
| | 5 % stress($\delta$5) | length N/cm | 3.52 | 1.53 | 4.02 |
| | | width N/cm | 2.23 | 1.45 | 3.75 |
| | 20 % stress($\delta$20) | length N/cm | 21.22 | 12.23 | 22.45 |
| | | width N/cm | 15.37 | 8.89 | 18.79 |
| | tensile strength | length N/cm | 131.24 | 121.32 | 145.30 |
| | | width N/cm | 123.21 | 87.24 | 136.20 |
| | flexural resistance(RB) | length N/cm | 0.0024 | 0.0023 | 0.0026 |
| | compressive stress(P3) | length N/cm | 0.22 | 0.10 | 0.22 |
| | elastic recovery(ER) | length % | 78.0 | 87.0 | 77.6 |
| | leather-likeness index P3/(RB·ER) | | 1.18 | 0.50 | 1.09 |
| | $\delta$20/$\delta$5 | length | 6.0 | 8.0 | 5.6 |
| | | width | 6.9 | 6.1 | 5.0 |
| | peel strength | N/cm | 24.5 | 25.5 | 24.7 |
| | bonding between elastic polymer and fibers | | no bonding | (no bonding)*1 | no bonding (B layer)*2 |
| | existence of elastic polymer in bundle of fine fibers | | not existent | (not existent)*1 | not existent(upper layer) existent(lower layer)*2 |

Ex.: Example        C.Ex.: Comparative Example

EP 1 167 619 B1

\* 1; Comparative Example 2 had no adhesive layer.

\* 2; The elastic polymers were not existent in a bundle of fine fibers of the upper layer corresponding to the sheet layer (1) and the elastic polymer (B) and the elastic polymer (A) were not bonded to the fibers. However, the bundle of fine fibers of the lower layer corresponding to the sheet layer (2) could not be recognized, the elastic polymer (C) was existent around the fine fibers, and the elastic polymer (B) and the elastic polymer (C) were bonded to the fibers.

Effect of the Invention

According to the present invention, there is obtained a leather-like sheet product which has good balance between softness and buckling resistance like natural leather and is deformed round with fine wrinkles when it is bent. According to the production process of the present invention, shrinkage in width can be suppressed in the production process, thereby making it easy to produce a product having a large width.

**Claims**

1.  Aleather-like sheet product comprising (a) a sheet layer (1) composed of a fiber assembly (1) of fine fibers and an elastic polymer (A) existent in a space between fibers of the fiber assembly (1), (b) a sheet layer (2) essentially composed of a fiber assembly (2) or composed of a fiber assembly (2) and an elastic polymer (C) existent in a space between fibers of the fiber assembly (2), and (c) an adhesive layer, composed of an elastic polymer (B), for bonding together the sheet layer (1) and the sheet layer (2), wherein
    (d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially bonded or not bonded to the elastic polymer (B); and (e) the elastic polymer (B) is existent in the adhesive layer in a state that it is bonded to at least the elastic polymer (A) contained in the sheet layer (1) at the interface.

2.  The leather-like sheet product of claim 1, wherein the fine fibers are existent as a bundle of fine fibers in the sheet layer (1), the bundle of fine fibers penetrates in the adhesive layer at the interface of the sheet layer (1), and the elastic polymer (B) as the component of the adhesive layer is substantially not existent in the inside space of the bundle of fine fibers.

3.  The leather-like sheet product of claim 1, wherein the adhesive layer is bonded to the elastic polymer (A) at the interface of the sheet layer (1).

4.  The leather-like sheet product of claim 1, wherein the sheet layer (2) is composed of the fiber assembly (2) and the elastic polymer (C) existent in a space between fibers of the fiber assembly.

5.  The leather-like sheet product of claim 4, wherein the sheet layer (2) is composed of fine fibers and the elastic polymer (C) is existent in a space between the fibers.

6.  The leather-like sheet product of claim 4, wherein the adhesive layer is bonded to the elastic polymer (C) at the interface of the sheet layer (2).

7.  The leather-like sheet product of any one of claims 1 to 6, wherein the elastic polymer (B) of the adhesive layer is substantially not bonded to the fibers constituting the sheet layer (2) at the interface of the sheet layer (2).

8.  The leather-like sheet product of claim 1, wherein the apparent density $\rho_1$ (g/cm$^3$) and thickness $t_1$ (mm) of the sheet layer (1) and the apparent density $\rho_2$ (g/cm$^3$) and thickness $t_2$ (mm) of the sheet layer (2) satisfy the following expressions (1) to (6) at the same time:

$$0.20 \leqq \rho_1 \leqq 0.48 \tag{1}$$

$$0.20 \leqq \rho_2 \leqq 0.48 \tag{2}$$

$$0.5 \leqq \rho_1/\rho_2 \leqq 2.4 \tag{3}$$

$$0.2 \leqq t_1 \leqq 1.5 \tag{4}$$

$$0.2 \leqq t_2 \leqq 2.5 \tag{5}$$

$$0.4 \leqq (t_1 + t_2) \leqq 4.0 \tag{6}.$$

9.  The leather-like sheet product of claim 1, wherein the average thickness of the adhesive layer is 0.01 to 0.5 mm.

10. The leather-like sheet product of claim 1, wherein the 100 % elongation stress of a film formed only from the elastic polymer (B) of the adhesive layer is 200 to 3,000 N/cm$^2$.

11. The leather-like sheet product of claim 8 which has a leather-likeness index of 0.5 to 2.0.

12. The leather-like sheet product of claim 1, wherein the surface of the sheet product has a peel strength of 20 N/cm or more.

13. A leather-like sheet product comprising (a) a sheet layer (1) composed of a fiber assembly (1) of fine fibers and an elastic polymer (A) existent in a space between fibers of the fiber assembly (1), (b) a sheet layer (2) composed of a fiber assembly (2) of fine fibers and an elastic polymer (C) existent in a space between fibers of the fiber assembly (2), and (c) an adhesive layer, composed of an elastic polymer (B), for bonding together the sheet layer (1) and the sheet layer (2), wherein
    (d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially not bonded to the elastic polymer (B); and (e) the elastic polymer (B) is existent in the adhesive layer in a state that it is bonded to the elastic polymer (A) contained in the sheet layer (1) at the interface and to the elastic polymer (C) contained in the sheet layer (2) at the interface.

14. Aleather-like sheet product comprising (a) a sheet layer (1) composed of a fiber assembly (1) of fine fibers and an elastic polymer (A) existent in a space between fibers of the fiber assembly (1), (b) a sheet layer (2) composed of a fiber assembly (2) of fine fibers and an elastic polymer (C) existent in a space between fibers of the fiber assembly (2), and (c) an adhesive layer, composed of an elastic polymer (B), for bonding together the sheet layer (1) and the sheet layer (2), wherein
    (d) the fibers of the sheet layer (1) and the fibers of the sheet layer (2) penetrate in the adhesive layer at the respective interfaces, the fibers of the sheet layer (1) are existent in the adhesive layer in a state that they are substantially not bonded to the elastic polymer (B), and the fibers of the sheet layer (2) are existent in the adhesive layer in a state that they are substantially bonded to the elastic polymer (B); and (e) the elastic polymer (B) is existent in the adhesive layer in a state that it is bonded to at least the elastic polymer (A) contained in the sheet layer (1) at the interface and to the elastic polymer (C) contained in the sheet layer (2) at the interface.

15. A process for producing a leather-like sheet product comprising the steps of:

bonding together a sheet layer (1') composed of a fiber assembly of sea-island type fibers made from a mixture of at least two different polymers which differ from each other in solvent solubility and an elastic polymer (A) existent in a space between fibers of the fiber assembly and a sheet layer (2) essentially composed of a fiber assembly (2) or composed of a fiber assembly (2) and an elastic polymer (C) existent in a space between fibers of the fiber assembly (2) by an adhesive layer composed of an elastic polymer (B); and

treating the laminated sheets with a solvent which does not dissolve the island component of the sea-island type fiber and the elastic polymers but dissolves the sea component of the sea-island type fiber to dissolve and remove the sea component in order to make a fine fiber from the sea-island fiber.

16. The leather-like sheet product production process of claim 15, wherein the sheet layer (2) is composed of fine fibers and the elastic polymer (C) existent in a space between the fibers.

17. The leather-like sheet product production process of claim 15, wherein the sheet layer (2) is composed of sea-island type fibers made from a mixture of at least two different polymers which differ from each other in solvent solubility and the elastic polymer (C) existent in a space between the fibers.

18. Artificial leather comprising the leather-like sheet product of claim 1, 13 or 14.

**Patentansprüche**

1. Lederartiges Flächenprodukt, umfassend (a) eine Flächenschicht (1), die aus einem Faseraggregat (1) feiner Fasern und einem in einem Raum zwischen Fasern des Faseraggregats (1) vorliegenden elastischen Polymer (A) aufgebaut ist, (b) eine Flächenschicht (2), die im wesentlichen aus einem Faseraggregat (2) aufgebaut ist oder aus einem Faseraggregat (2) und einem in einem Raum zwischen Fasern des Faseraggregats (2) vorliegenden elastischen Polymer (C) aufgebaut ist, und (c) eine Haftmittelschicht, die aus einem elastischen Polymer (B) aufgebaut ist, zum Verbinden der Flächenschicht (1) und der Flächenschicht (2), wobei

(d) die Fasern der Flächenschicht (1) und die Fasern der Flächenschicht (2) in die Haftmittelschicht an den entsprechenden Grenzflächen eindringen, die Fasern der Flächenschicht (1) in der Haftmittelschicht in einem Zustand vorliegen, daß sie im wesentlichen nicht an das elastische Polymer (B) gebunden sind, und die Fasern der Flächenschicht (2) in der Haftmittelschicht in einem Zustand vorliegen, daß sie im wesentlichen gebunden oder nicht gebunden an das elastische Polymer (B) sind, und wobei (e) das elastische Polymer (B) in der Haftmittelschicht in einem Zustand vorliegt, daß es mindestens an das in der Flächenschicht (1) enthaltene elastische Polymer (A) an der Grenzfläche gebunden ist.

2. Lederartiges Flächenprodukt nach Anspruch 1, wobei die feinen Fasern als ein Bündel von feinen Fasern in der Flächenschicht (1) vorliegen, das Bündel von feinen Fasern in die Haftmittelschicht an der Grenzfläche der Flächenschicht (1) eindringt und das elastische Polymer (B) als die Komponente der Haftmittelschicht im wesentlichen nicht in dem Innenraum des Bündels von feinen Fasern vorliegt.

3. Lederartiges Flächenprodukt nach Anspruch 1, wobei die Haftmittelschicht an das elastische Polymer (A) an der Grenzfläche der Flächenschicht (1) gebunden ist.

4. Lederartiges Flächenprodukt nach Anspruch 1, wobei die Flächenschicht (2) aus dem Faseraggregat (2) und dem in einem Raum zwischen Fasern des Faseraggregats vorliegenden elastischen Polymer (C) aufgebaut ist.

5. Lederartiges Flächenprodukt nach Anspruch 4, wobei die Flächenschicht (2) aus feinen Fasern aufgebaut ist und das elastische Polymer (C) in einem Raum zwischen den Fasern vorliegt.

6. Lederartiges Flächenprodukt nach Anspruch 4, wobei die Haftmittelschicht an das elastische Polymer (C) an der Grenzfläche der Flächenschicht (2) gebunden ist.

7. Lederartiges Flächenprodukt nach einem der Ansprüche 1 bis 6, wobei das elastische Polymer (B) der Haftmittelschicht im wesentlichen nicht an die Fasem, welche die Flächenschicht (2) bilden, an der Grenzfläche der Flächenschicht (2) gebunden ist.

8. Lederartiges Flächenprodukt nach Anspruch 1, wobei die scheinbare Dichte $\rho_1$ (g/cm$^3$) und die Dicke $t_1$ (mm) der Flächenschicht (1) und die scheinbare Dichte $\rho_2$ (g/cm$^3$) und die Dicke $t_2$ (mm) der Flächenschicht (2) gleichzeitig den folgenden Ausdrücken (1) bis (6) genügen:

$$0{,}20 \leq \rho_1 \leq 0{,}48 \tag{1}$$

$$0{,}20 \leq \rho_2 \leq 0{,}48 \tag{2}$$

$$0{,}5 \leq \rho_1/\rho_2 \leq 2{,}4 \tag{3}$$

$$0{,}2 \leq t_1 \leq 1{,}5 \tag{4}$$

$$0{,}2 \leq t_2 \leq 2{,}5 \tag{5}$$

$$0{,}4 \leq (t_1 + t_2) \leq 4{,}0 \tag{6}.$$

**9.** Lederartiges Flächenprodukt nach Anspruch 1, wobei die durchschnittliche Dicke der Haftmittelschicht 0,01 bis 0,5 mm beträgt.

**10.** Lederartiges Flächenprodukt nach Anspruch 1, wobei die 100% Dehnungsbelastung einer nur aus dem elastischen Polymer (B) der Haftmittelschicht gebildeten Folie 200 bis 3.000 N/cm$^2$ beträgt.

**11.** Lederartiges Flächenprodukt nach Anspruch 8, welches einen Lederartigkeitsindex von 0,5 bis 2,0 aufweist.

**12.** Lederartiges Flächenprodukt nach Anspruch 1, wobei die Oberfläche des Flächenprodukts eine Abziehfestigkeit von 20 N/cm oder mehr aufweist.

**13.** Lederartiges Flächenprodukt, umfassend (a) eine Flächenschicht (1), die aus einem Faseraggregat (1) feiner Fasem und einem in einem Raum zwischen Fasern des Faseraggregats (1) vorliegenden elastischen Polymer (A) aufgebaut ist, (b) eine Flächenschicht (2), die aus einem Faseraggregat (2) feiner Fasern und einem in einem Raum zwischen Fasern des Faseraggregats (2) vorliegenden elastischen Polymer (C) aufgebaut ist, und (c) eine Haftmittelschicht, die aus einem elastischen Polymer (B) aufgebaut ist, zum Verbinden der Flächenschicht (1) und der Flächenschicht (2), wobei
(d) die Fasern der Flächenschicht (1) und die Fasern der Flächenschicht (2) in die Haftmittelschicht an den entsprechenden Grenzflächen eindringen, die Fasern der Flächenschicht (1) in der Haftmittelschicht in einem Zustand vorliegen, daß sie im wesentlichen nicht an das elastische Polymer (B) gebunden sind, und die Fasern der Flächenschicht (2) in der Haftmittelschicht in einem Zustand vorliegen, daß sie im wesentlichen nicht an das elastische Polymer (B) gebunden sind, und wobei (e) das elastische Polymer (B) in der Haftmittelschicht in einem Zustand vorliegt, daß es an das in der Flächenschicht (1) enthaltene elastische Polymer (A) an der Grenzfläche und an das in der Flächenschicht (2) enthaltene Polymer (C) an der Grenzfläche gebunden ist.

**14.** Lederartiges Flächenprodukt, umfassend (a) eine Flächenschicht (1), die aus einem Faseraggregat (1) feiner Fasern und einem in einem Raum zwischen Fasern des Faseraggregats (1) vorliegenden elastischen Polymer (A) aufgebaut ist, (b) eine Flächenschicht (2), die aus einem Faseraggregat (2) feiner Fasern und einem in einem Raum zwischen Fasern des Faseraggregats (2) vorliegenden elastischen Polymer (C) aufgebaut ist, und (c) eine Haftmittelschicht, die aus einem elastischen Polymer (B) aufgebaut ist, zum Verbinden der Flächenschicht (1) und der Flächenschicht (2), wobei
(d) die Fasern der Flächenschicht (1) und die Fasern der Flächenschicht (2) in die Haftmittelschicht an den entsprechenden Grenzflächen eindringen, die Fasern der Flächenschicht (1) in der Haftmittelschicht in einem Zustand vorliegen, daß sie im wesentlichen nicht an das elastische Polymer (B) gebunden sind, und die Fasem der Flächenschicht (2) in der Haftmittelschicht in einem Zustand vorliegen, daß sie im wesentlichen an das elastische Polymer (B) gebunden sind, und wobei (e) das elastische Polymer (B) in der Haftmittelschicht in einem Zustand vorliegt, daß es mindestens an das in der Flächenschicht (1) enthaltene elastische Polymer (A) an der Grenzfläche und an das in der Flächenschicht (2) enthaltene Polymer (C) an der Grenzfläche gebunden ist.

**15.** Verfahren zur Herstellung eines lederartigen Flächenprodukts, umfassend die Schritte des Verbindens einer Flächenschicht (1'), die aus einem Faseraggregat von Fasern vom sea-island-Typ, welche aus einem Gemisch von mindestens zwei unterschiedlichen Polymeren, die sich in der Lösungsmittel-Löslichkeit voneinander unterscheiden, hergestellt sind, und einem in einem Raum zwischen Fasern des Faseraggregats vorliegenden elastischen Polymer (A) aufgebaut ist, und einer Flächenschicht (2), die im wesentlichen aus einem Faseraggregat (2) oder aus einem Faseraggregat (2) und einem in einem Raum zwischen Fasern des Faseraggregats (2) vorliegenden elastischen Polymer (C) aufgebaut ist, durch eine Haftmittelschicht, die aus einem elastischen Polymer (B) aufgebaut ist, und des Behandelns der laminierten Flächen mit einem Lösungsmittel, welches die island-Komponente der Faser vom sea-island-Typ und die elastischen Polymere nicht auflöst, aber die sea-Komponente der Faser vom sea-island-Typ auflöst, wodurch die sea-Komponente gelöst und entfernt wird, und um eine feine Faser aus der Faser vom sea-island-Typ herzustellen.

**16.** Verfahren zur Herstellung eines lederartigen Flächenprodukts nach Anspruch 15, wobei die Flächenschicht (2) aus feinen Fasern und dem in einem Raum zwischen den Fasern vorliegenden elastischen Polymer (C) aufgebaut ist.

**17.** Verfahren zur Herstellung eines lederartigen Flächenprodukts nach Anspruch 15, wobei die Flächenschicht (2) aus Fasern vom sea-island-Typ, welche aus einem Gemisch von mindestens zwei unterschiedlichen Polymeren, die sich in der Lösungsmittel-Löslichkeit voneinander unterscheiden, hergestellt sind, und dem in einem Raum zwischen den Fasern vorliegenden Polymer (C) aufgebaut ist.

**18.** Kunstleder, umfassend das lederartige Flächenprodukt gemäß Anspruch 1, 13 oder 14.

**Revendications**

**1.** Produit en feuille rappelant le cuir, comprenant (a) une couche en feuille (1) composée d'une structure de fibres (1) formée de fibres fines et d'un polymère élastique (A) présent dans les interstices situés entre les fibres de la structure de fibres (1), (b) une couche en feuille (2) essentiellement composée d'une structure de fibres (2) ou composée d'une structure de fibres (2) et d'un polymère élastique (C) présent dans les interstices situés entre les fibres de la structure de fibres (2), et (c) une couche adhésive composée d'un polymère élastique (B), destinée à assembler la couche en feuille (1) et la couche en feuille (2), dans lequel

(d) les fibres de la couche en feuille (1) et les fibres de la couche en feuille (2) pénètrent dans la couche adhésive au niveau des interfaces respectives, les fibres de la couche en feuille (1) se présentant dans la couche adhésive sous forme globalement non liée au polymère élastique (B), et les fibres de la couche en feuille (2) se présentant dans la couche adhésive sous forme globalement liée ou non liée au polymère élastique (B) ; et (e) dans lequel le polymère élastique (B) est présent dans la couche adhésive sous forme liée, au moins, au polymère élastique (A) contenu dans la couche en feuille (1) au niveau de l'interface.

**2.** Produit en feuille rappelant le cuir selon la revendication 1, dans lequel les fibres fines sont présentes sous forme de faisceau de fibres fines dans la couche en feuille (1), lequel faisceau de fibres fines pénètre dans la couche adhésive au niveau de l'interface de la couche en feuille (1), et où il n'existe pratiquement pas de polymère élastique (B), en tant que composant de la couche adhésive, dans les interstices du faisceau de fibres fines.

**3.** Produit en feuille rappelant le cuir selon la revendication 1, dans lequel la couche adhésive est liée au polymère élastique (A) au niveau de l'interface de la couche en feuille (1).

**4.** Produit en feuille rappelant le cuir selon la revendication 1, dans lequel la couche en feuille (2) se compose de la structure de fibres (2) et du polymère élastique (C) présent dans les interstices situés entre les fibres de la structure de fibres.

**5.** Produit en feuille rappelant le cuir selon la revendication 4, dans lequel la couche en feuille (2) se compose de fibres fines le polymère élastique (C) est présent dans les interstices situés entre les fibres.

**6.** Produit en feuille rappelant le cuir selon la revendication 4, dans lequel la couche adhésive est liée au polymère élastique (C) au niveau de l'interface de la couche en feuille (2).

# EP 1 167 619 B1

7. Produit en feuille rappelant le cuir selon l'une quelconque des revendications 1 à 6, dans lequel le polymère élastique (B) de la couche adhésive n'est globalement pas lié aux fibres constituant la couche en feuille (2) au niveau de l'interface de la couche en feuille (2).

8. Produit en feuille rappelant le cuir selon la revendication 1, dans lequel la densité apparente $\rho_1$ (g/cm$^3$) et l'épaisseur $t_1$ (mm) de la couche en feuille (1), et la densité apparente $\rho_2$ (g/cm$^3$) et l'épaisseur $t_2$ (mm) de la couche en feuille (2) satisfont simultanément aux expressions suivantes (1) à (6) :

$$0,20 \leq \rho_1 \leq 0,48 \tag{1}$$

$$0,20 \leq \rho_2 \leq 0,48 \tag{2}$$

$$0,5 \leq \rho_1/\rho_2 \leq 2,4 \tag{3}$$

$$0,2 \leq t_1 \leq 1,5 \tag{4}$$

$$0,2 \leq t_2 \leq 2,5 \tag{5}$$

$$0,4 \leq (t_1 + t_2) \leq 4,0 \tag{6}$$

9. Produit en feuille rappelant le cuir selon la revendication 1, dans lequel l'épaisseur moyenne de la couche adhésive est de 0,01 à 0,5 mm.

10. Produit en feuille rappelant le cuir selon la revendication 1, dans lequel la contrainte d'allongement à 100 % d'un film constitué uniquement du polymère élastique (B) de la couche adhésive est de 200 à 3 000 N/cm$^2$.

11. Produit en feuille rappelant le cuir selon la revendication 8, dont l'indice de similitude du cuir est compris entre 0,5 et 2,0.

12. Produit en feuille rappelant le cuir selon la revendication 1, dont la surface a une résistance à l'arrachement de 20 N/cm ou plus.

13. Produit en feuille rappelant le cuir, comprenant (a) une couche en feuille (1) composée d'une structure de fibres (1) formée de fibres fines et d'un polymère élastique (A) présent dans les interstices situés entre les fibres de la structure de fibres (1), (b) une couche en feuille (2) composée d'une structure de fibres (2) formée de fibres fines et d'un polymère élastique (C) présent dans les interstices situés entre les fibres de la structure de fibres (2), et (c) une couche adhésive composée d'un polymère élastique (B), destinée à assembler la couche en feuille (1) et la couche en feuille (2), dans lequel

(d) les fibres de la couche en feuille (1) et les fibres de la couche en feuille (2) pénètrent dans la couche adhésive au niveau des interfaces respectives, les fibres de la couche en feuille (1) se présentant dans la couche adhésive sous forme globalement non liée au polymère élastique (B), et les fibres de la couche en feuille (2) se présentant dans la couche adhésive sous forme globalement non liée au polymère élastique (B) ; et (e) le polymère élastique (B) est présent dans la couche adhésive sous forme liée au polymère élastique (A) contenu dans la couche en feuille (1) au niveau de l'interface, et au polymère élastique (C) contenu dans la couche en feuille (2) au niveau de l'interface.

14. Produit en feuille rappelant le cuir, comprenant (a) une couche en feuille (1) composée d'une structure de fibres (1) formée de fibres fines et d'un polymère élastique (A) présent dans les interstices situés entre les fibres de la structure de fibres (1), (b) une couche en feuille (2) composée d'une structure de fibres (2) formée de fibres fines et d'un polymère élastique (C) présent dans les interstices situés entre les fibres de la structure de fibres (2), et (c) une couche adhésive composée d'un polymère élastique (B), destinée à assembler la couche en feuille (1) et la couche en feuille (2), dans lequel

(d) les fibres de la couche en feuille (1) et les fibres de la couche en feuille (2) pénètrent dans la couche adhésive au niveau des interfaces respectives, les fibres de la couche en feuille (1) se présentant dans la couche adhésive sous forme globalement non liée au polymère élastique (B), et les fibres de la couche en feuille (2) se présentant dans la couche adhésive sous forme globalement liée au polymère élastique (B) ; et (e) le polymère élastique (B) est présent dans la couche adhésive sous forme liée, au moins, au polymère élastique (A) contenu dans la couche en feuille (1) au niveau de l'interface et au polymère élastique (C) contenu dans la couche en feuille (2) au niveau de l'interface.

**15.** Procédé de fabrication d'un produit en feuille rappelant le cuir, comprenant les étapes consistant à :

Assembler, par une couche adhésive composée d'un polymère élastique (B), une couche en feuille (1') composée d'une structure de fibres de type sea-island, réalisée à partir d'un mélange d'au moins deux polymères distincts -différant l'un de l'autre par leur solubilité envers les solvants- et d'un polymère élastique (A) présent dans les interstices situés entre les fibres de la structure de fibre, et une couche en feuille (2) essentiellement composée d'une structure de fibres (2), ou bien d'une structure de fibres (2) et d'un polymère élastique (C) présent dans les interstices situés entre les fibres de la structure de fibres (2) ; et
traiter les feuilles laminées au moyen d'un solvant qui ne dissout pas le composant « île » de la fibre de type sea-island et les polymères élastiques, mais dissout le composant « mer » de la fibre de type sea-island, en vue de dissoudre et d'enlever le composant « mer » pour fabriquer une fibre fine à partir de la fibre sea-island.

**16.** Procédé de fabrication d'un produit en feuille rappelant le cuir selon la revendication 15, dans lequel la couche en feuille (2) se compose de fibres fines et du polymère élastique (C) présent dans les interstices situés entre les fibres.

**17.** Procédé de fabrication d'un produit en feuille rappelant le cuir selon la revendication 15, dans lequel la couche en feuille (2) se compose de fibres de type sea-island réalisées à partir d'un mélange d'au moins deux polymères distincts -différant l'un de l'autre par leur solubilité envers les solvants- et du polymère élastique (C) présent dans les interstices situés entre les fibres.

**18.** Cuir artificiel comprenant le produit en feuille rappelant le cuir selon les revendications 1, 13 ou 14.